# EUROPEAN PATENT APPLICATION

(11) **EP 0 820 687 A1**
(43) Date of publication of application: **28.01.1998**
(21) Application number: 97305510.6
(22) Date of filing: 23.07.1997
(51) Int. Cl.: A01B 5/14, A01B 17/00

(54) **Improvements in and relating to agricultural ploughs**

(30) Priority: 25.07.1996 GB 9615666
(71) Applicant: TOPHAM, Peter Douglas Temple, St. Neots, Cambs. PE19 4XQ (GB)
(72) Inventor: TOPHAM, Peter Douglas Temple, St. Neots, Cambs. PE19 4XQ (GB)
(74) Representative: Price, Nigel John King

(57) **Abstract**

An agricultural plough is reversible for left-handed and right-handed ploughing. A plurality of right-handed forward soil displacing units 5A are provided, each paired with a left-handed soil displacing unit. Associated with each pair of left and right-handed soil displacing units is a rotatable ploughing disc 8. Each disc 8 is mounted relative to the plough frame 3 so as to be able to move between its associated soil-displacing units 5A,5B to switch between two operative positions upon inversion of the frame. Accordingly, each rotatable ploughing disc 8 is utilized in both right and left-handed ploughing modes.

## Description

This invention relates to agricultural ploughs. In some countries there are bans on straw and stubble burning. There is, consequently, a need for arable farmers to be able to incorporate straw and other debris into the ground.

Many proposals have been made for straw incorporation. Mouldboard ploughs are of limited use for this purpose in the case of heavy land. When the ground is hard and dry penetration is a problem and wear of the soil-engaging parts of the plough is excessive. When the land is wet the mouldboard plough causes an unacceptable level of soil compaction.

Disc ploughs have also been tried. Whilst the rotary action of a disc reduces the compaction effect mentioned above there nevertheless remains, particularly in the case of heavy straw burying conditions, the problem of achieving effective straw burial.

A disc plough is disclosed in the applicant's earlier WO-A-92/17050. This earlier plough includes a frame beam which, in use, extends diagonally with respect to the direction of ploughing. The diagonal direction in which the beam extends relative to the direction of ploughing can be changed so as to allow the plough to switch between right- and left-hand ploughing. Individual plough units are connected to the beam by pivot connections to trail from the beam. Each plough unit includes a ploughing disc. Each disc is mounted for rotation about a substantially horizontal shaft which itself is pivotable about its end remote from the plough disc so as to enable reversal of the inclination of the ploughing disc relative to the direction of travel, to change the arrangement between right- and left-hand ploughing.

Although this earlier plough provides good results in terms of ploughing performance and burying of straw, the structure of the plough is complicated, having many moving parts, and is expensive to produce. Furthermore, the plough is also very heavy.

According to the present invention there is provided a plough comprising:
a plurality of pairs of oppositely-handed soil-displacing units mounted on a frame and spaced apart across an intended ploughing direction, the frame being selectively invertible between left and right-handed ploughing positions to lower, in use, a selected unit from each pair of units for ploughing engagement with soil and to raise the other unit of each pair; and
a matching plurality of rotatable ploughing discs each associated with a different said pair of units and each mounted relative to the frame to move between its associated units to switch between two operative positions upon inversion of the frame between said left and right-handed ploughing positions, in each of its operative positions each said disc being positioned for ploughing engagement with soil behind the selected unit of its associated pair of units relative to the intended ploughing direction.

The hereinafter described and first illustrated embodiment of a reversible plough in accordance with the present invention is lighter and has a simpler, and thus less costly, construction than the plough disclosed in WO-A-92/17050. The plough also has fewer wearing parts and is lighter in weight.

The plough of the present invention is reversible in so far as it is able to be used in both right- and left-handed ploughing by inverting the frame. Although pairs of oppositely-handed soil displacing units are provided, the rotatable ploughing discs are able to move relative to the frame so that when the plough is in its left-handed ploughing mode each disc is associated with a left-handed soil displacing unit and when the frame is inverted to switch the plough to its right-handed ploughing mode these same discs are movable each to be used with a right-handed soil displacing unit.

Embodiments of a plough in accordance with the present invention will now be described, by way of example only, with reference to the accompanying drawings, in which:
Figure 1 is a view of a first preferred embodiment of plough mounted on the rear of a tractor and viewed from behind and from the left side, with only the back right-hand corner of the tractor visible and with the plough lifted on the hitch of the tractor clear of the ground;
Figure 2 is a close-up detail view of the leading right-handed soil displacing element of the first embodiment and its associated ploughing disc, from above and from the right;
Figure 3 is a detail view of the soil displacing element and ploughing disc of Figure 2, from the rear and from the right looking in the general direction of the arrow III in Figure 2;
Figure 4 is a schematic top plan view of the leading part of the first embodiment of plough, showing the leading two right-handed soil displacing units (with the left-handed soil displacing units omitted for clarity) and showing the plough in use;
Figure 5 is a schematic top plan view of the leading part of the first embodiment of plough, showing the leading two left-handed soil displacing units (with the right-handed soil displacing units omitted for clarity) and showing the plough in use;
Figure 6 is a close-up detail view of a left-handed soil displacing element, showing an alternative adjustable bar point construction;
Figure 7 is a view similar to that of Figure 3, but showing a second preferred embodiment; and
Figure 8 is a similar view to Figure 1, but of a third preferred embodiment of plough.

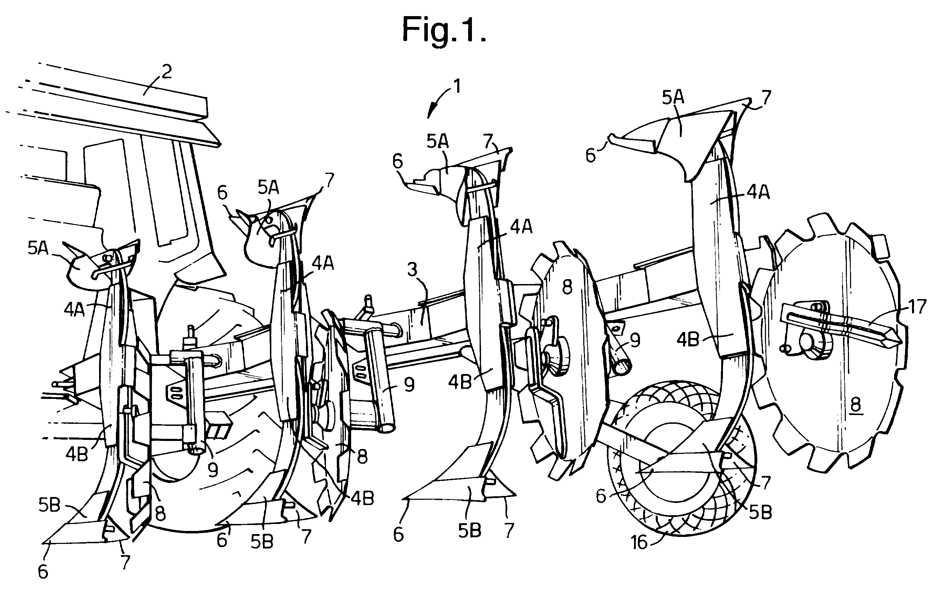

Figure 1 shows an embodiment of a plough 1 in accordance with the present invention mounted on the rear of a tractor 2; only the back right-hand corner of the tractor 2 is shown.

The first illustrated embodiment of a plough 1 comprises a frame 3. The frame 3 comprises a main beam which extends rearwardly from the tractor and, in use, extends diagonally across the direction of ploughing PD. In the first illustrated embodiment the frame 3 has four upwardly extending legs 4A and four downwardly extending legs 4B. As can be seen from the drawings, each upwardly extending leg 4A is, in fact, continuous with a downwardly extending leg 4B. Although the plough is shown in Figure 1 as having four pairs of legs 4A, 4B the invention is applicable to ploughs with other numbers of legs.

Soil displacing units 5A, 5B are mounted on the ends of the legs 4A, 4B of each pair of legs. In the first illustrated embodiment the upwardly extending legs 4A are shown as being provided with right-handed soil displacing units 5A meaning that they will, in use, displace soil to the right relative to the forward ploughing direction. The downwardly extending legs 4B are provided with left-handed soil displacing units 5B for, in use, displacing soil to the left, relative to the forward ploughing direction. The frame 3 is shown in Fig. 1 configured for left-handed ploughing as the left-handed soil displacing units 5B are positioned so as to engage the ground when the frame 3 is lowered on the tractor hitch.

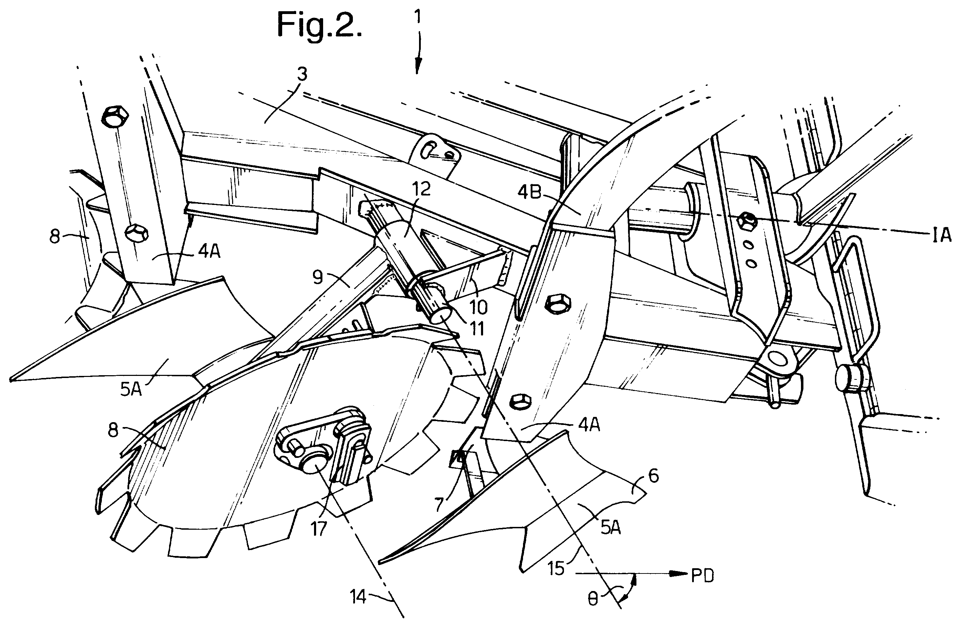

The frame 3 is selectively invertible about an inversion axis IA (marked in Figures 2, 4 and 5) generally parallel to the intended ploughing direction, in the manner of the frames of known mouldboard ploughs. Indeed, the main plough frame 3, legs 4A, 4B and inverting mechanism may be of the same basic steel frame design as used for conventional mouldboard ploughs. By inverting the frame 3 a half turn about axis IA the right-handed soil displacing units 5A can be moved from pointing up in the air (as shown in Figure 1) to pointing downwardly ready to engage the ground upon lowering of the frame 3.

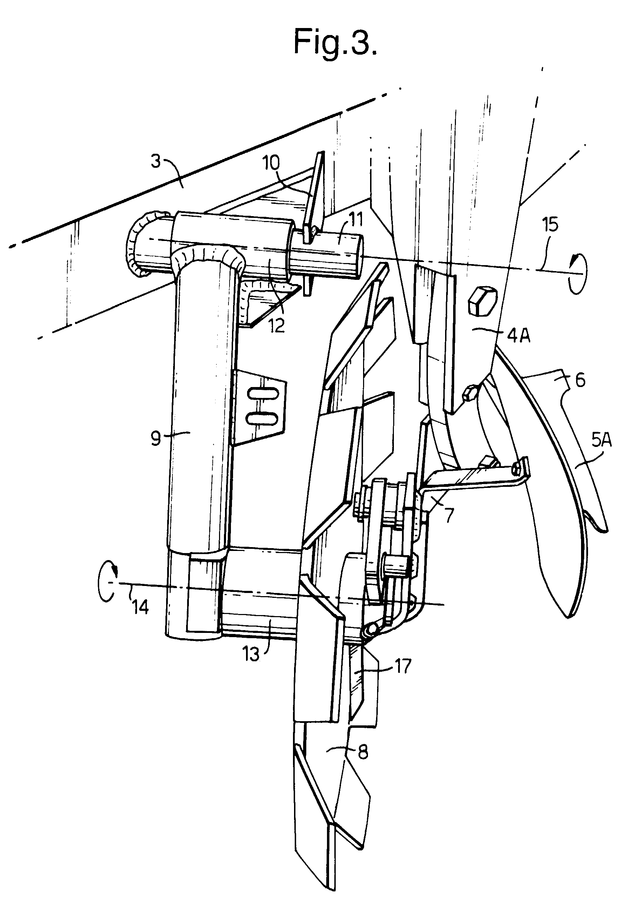

In the first illustrated embodiment the soil-displacing units comprise mouldboard-type bodies, as most readily seen in Figures 2 and 3 which show the leading right-handed soil-displacing unit 5A; in Figure 2 most of the following soil-displacing unit 5A is also visible, offset to the left relative to the intended ploughing direction PD. In use, when the plough is set for right-handed ploughing and the frame 3 is lowered so as to bring the right-handed soil-displacing units 5A into ploughing engagement with the soil, upon forward movement of the tractor the mouldboard-type bodies are shaped to skim off upwardly from the surface of the ground a sliver of soil, together with any stubble thereon, and to invert the sliver as it is moved laterally into an adjacent furrow. Having slivers rise up the mouldboard shapes of the bodies is preferred to simply pushing the soil sideways at ground level without inverting it.

Each soil-displacing unit 5A, 5B advantageously includes a leading point 6 for, in use, engaging and cutting the ground. This point generates a draft holding the plough down.

In the first illustrated embodiment each soil-displacing unit includes a landside 7 extending rearwardly from its respective point 6, parallel to the ploughing direction PD. These landsides help to resist transverse movement of the plough. Alternatively, or additionally, a large landside (not shown) may be provided at the trailing end of the frame 3, independently of a soil-displacing unit, to extend into the ground to locate the plough laterally.

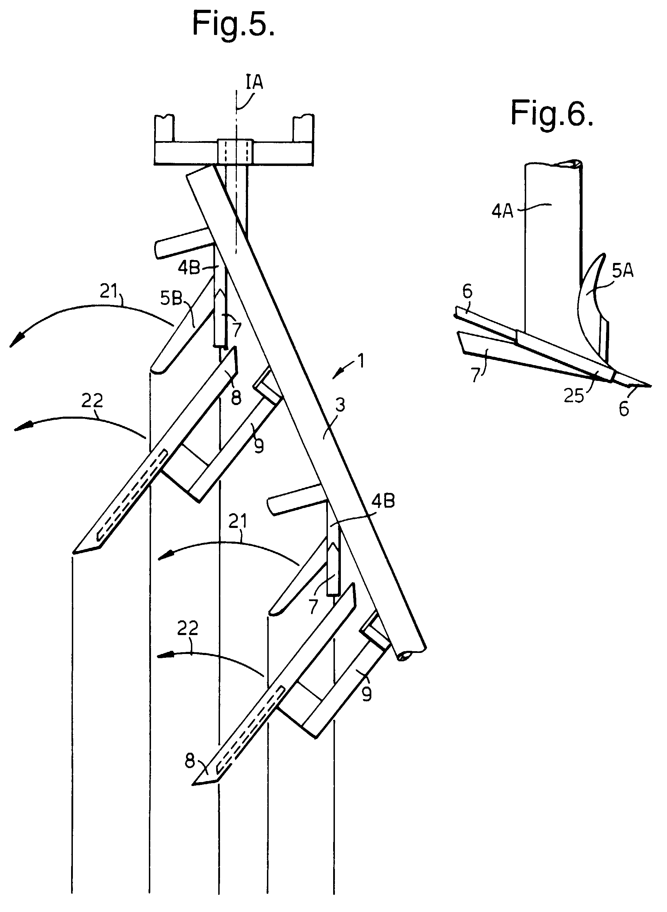

The first illustrated embodiment of plough also comprises four rotatable ploughing discs 8, each disc being associated with a pair of oppositely-handed soil displacing units 5A, 5B. In the first illustrated embodiment, each ploughing disc 8 is pivotally mounted to the frame 3 via a swing arm 9, as is most clearly shown in Figure 3. Each disc 8 is movable relative to the frame 3 and its associated soil-displacing units 5A, 5B to switch between two operative positions, one such position corresponding with right-handed ploughing (as shown in Figures 2-4) and the other corresponding with left-handed ploughing (as shown in Figures 1 and 5). In each of its two possible operative positions a ploughing disc 8 will, in use, be in ploughing engagement with the soil behind whichever unit of its associated pair of oppositely handed soil-displacing units 5A, 5B is in engagement with the ground.

As is most readily seen in Figures 2 and 3, the pivotal connection of each swing arm 9 to the frame 3 includes a bracket 10 welded to the main diagonal member of the frame 3. The bracket 10 triangulates a section of bar 11 welded to both the bracket 10 and to the side wall of the main frame member. A collar 12 is rotatably mounted on the bar 11. One end of the main tube section which forms swing arm 9 is welded to the collar 12. The opposite end of the arm 9 is provided with a bearing and stub axle assembly 13 on which a ploughing disc 8 is mounted to rotate, in use, about axis of rotation 14. The pivotal connection is advantageously made of steel, as is the swing arm 9 and ploughing disc 8. The swing arm 9 is capable of swinging relative to the frame 3 and the soil-displacing units 5A, 5B about a pivot axis 15, to switch the ploughing disc 8 between its two operative positions.

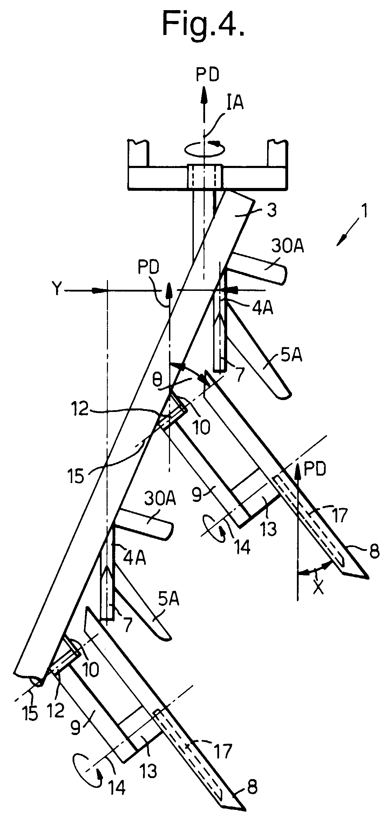

The ploughing direction PD is marked in both Figures 2-5. As can be seen in Figures 2 and 3, the pivot axis 15 is generally horizontal in use of the plough and is angled in the horizontal plane relative to the intended ploughing direction PD. Advantageously the angle of intersection θ between the pivot axis 15 and the ploughing direction PD is in the range of approximately 25-70°, preferably about 40° - see Figures 2 and 4. In the first illustrated embodiment this angle θ is linked to the angle of the ploughing disc 8 to the ploughing direction PD, as discussed below.

Advantageously, the axes of rotation 14 for the four different ploughing discs 8 are all generally parallel to one another. Similarly, the four pivot axes 15 are advantageously all generally parallel to one another.

In the first illustrated embodiment the axis of rotation 14 for each ploughing disc 8 is horizontal, so that each ploughing disc 8 is in use generally perpendicular to the ground, albeit inclined relative to the intended ploughing direction PD. The discs 8 may, however, be canted over slightly (not shown) so as no longer to be generally perpendicular to the ground. This would have the effect of raising the right hand end of the pivot axis 14 (when viewed from the position of viewing in Figure 3).

Upon lowering the beam 3 from the position shown in Figure 1 so as to enable ploughing to commence, a support wheel 16 is brought into contact with the ground to help set the operational height of the frame 3 in use. In the arrangement illustrated in Figures 2 and 3 each soil-displacing unit 5A is arranged to extend into the ground by approximately 5-15 centimetres. Each ploughing disc 8 extends into the ground by a greater amount, for example 15-25 centimetres.

The front face of each soil-displacing unit 5A and that of the rotatable ploughing disc 8 positioned therebehind are inclined to the intended ploughing direction PD. As is shown most clearly in Figures 4 and 5 the soil-displacing units 5 are inclined relative to the ploughing direction PD by approximately the same amount as their respective ploughing discs 8. The rearwardly facing face of the central portion of each ploughing disc 8 in use advantageously makes an angle X with the intended ploughing direction PD of approximately 20-60°, preferably about 35° as shown. Because, in the first illustrated embodiment, the pivot axes and axes of rotation 14, 15 are all parallel to one another and the axis of rotation 14 of each disc is perpendicular to the rearwardly facing face of that ploughing disc 8 angle X = 90° - θ.

In the first illustrated embodiment the legs 4 are spaced apart down the length of the beam 3. Because the beam 3 extends diagonally with respect to the ploughing direction PD the legs have a lateral spacing Y across the ploughing direction - see Figure 4. This lateral spacing Y may, for example, be of the order of 30-45 cm.

To enable a rotatable ploughing disc 8 to be used for both left- and right-handed ploughing the disc 8 has to be movable with respect to the frame 3 and its associated pair of soil-displacing units 5. In the first illustrated embodiment this movement of the ploughing discs 8 from their operative right-handed ploughing positions to their operative left-handed ploughing positions is achieved via pivoting. Upon inverting the frame by turning it through a half-turn about axis IA generally parallel to ploughing direction PD, the swing arms 9 are pivoted around their respective pivot axes 15 to switch each of the tilling discs from being in its operative position behind its associated right-handed soil-displacing unit (as shown in Figures 2-4) to its alternative operative position behind its associated left-handed soil-displacing unit (as shown in Figures 1 and 5). The action of inverting the frame 3 from the position shown in Figures 2-4 is thus coordinated with each ploughing disc 8 switching from being configured for right-hand ploughing, i.e. so as to displace soil to the right, to become configured for left-handed ploughing, i.e. so as to move soil to the left.

Gravity may be relied upon to cause the swing arms 9 and discs 8 to move from one operative position to the other operative position upon inverting the frame 3. Ideally, some sort of bump stop (not shown) and/or damper is provided to reduce the risk of damage to the plough upon a swing arm 9 and disc 8 moving from one operative position to arrive suddenly at its other operative position. Alternatively, pivotal movement of the swing arm 9 may be driven, for example by using a hydraulic or pneumatic ram.

Advantageously, any bump stop is adjustable so as to allow for change of the arc, around pivot axis 15, through which the swing arm 9 is movable. In this way, the location of a disc's operative position relative to its soil-displacing unit 5 may be varied slightly to change the depth to which the disc 8 will extend into the soil in use.

If necessary, means (not shown) may be provided for locking the swing arms 9 relative to the frame 3 when the discs 8 are in their operative positions to resist any tendency for the discs 8 in use to ride up out of the ground by pivoting on their swing arms 9.

In the first illustrated embodiment the ploughing discs 8 have a planar central portion and an inclined flange portion extending from the periphery of the central portion, with an abrupt transition being provided from the central portion to the flange portion. Furthermore, the flange portion is shown in Figures 1-3 as being toothed. It has been found that this shape for the ploughing discs provides good results. Other shaped ploughing discs may, however, be utilised. For example, the central portion of the ploughing disc may be slightly curved to have a convex or concave surface within the flange portion.
Alternatively or additionally, the flange portion may be made slightly concave. The shape and construction of the discs 8 may be as described in the applicant's WO-A-92/06578, the disclosure of which is incorporated herein by way of reference.

In the first illustrated embodiment in both of its operative positions each disc 8 has a generally similar geometric position relative to the selected (ground-engaging) one of its two associated soil-displacing units, despite being oppositely-handed in its different operative positions. In the first illustrated embodiment the oppositely-handed soil-displacing units 5A,5B of each pair are mounted on the opposite ends of a symmetrically shaped leg 4 to be positioned symmetrically relative to the main plough frame, with the result that the pivot axis 15 for each ploughing disc 8 is equidistantly spaced from that disc's two associated soil-displacing units 5. The soil-displacing units of each pair of units 5A,5B may, however, be provided on separate and/or asymmetric legs 4A,4B (not shown) . To achieve a generally similar geometric position for the associated ploughing disc 8 relative to its units 5A,5B in both of its operative positioned in such a situation, the pivot axis 15 for that disc 8 may be required not to be equidistantly spaced from the units.

The relative positioning between the operative soil-displacing unit 5A and the following ploughing disc 8 illustrated in the figures is preferred, rather than being essential. Each ploughing disc 8 includes a ground-contacting leading edge portion which, in use, is at ground level and rolls into contact with the ground as the disc rotates. This portion is not a fixed point on the disc but is an imaginary point which moves around the disc as the disc rotates, to stay fixed relative to the associated soil-displacing unit 5 as the first point of contact between the leading edge of the disc 8 and the ground. In the embodiment illustrated in the figures the ground-contacting leading edge portion of each ploughing disc 8 is positioned behind and in alignment (in the ploughing direction PD) with the point 6 of its operative associated soil-displacing unit 5.

The ground-contacting leading edge portion of each ploughing disc does not, however, need to be aligned in the ploughing direction PD with the point 6. Instead, it could be arranged to be laterally offset (to the right-hand side in the context of Figures 2 and 3) to be behind and laterally to overlap with a portion of the soil-displacing unit 5A to the right of the point 6. This lateral offset may be of the order of several centimetres, for example approximately 5-10 centimetres.

In the first illustrated embodiment scrapers 17 are shown as being mounted on the forward faces of the discs 8. These scrapers can rotate through less than a full revolution so that, in use, they do not move with the discs 8. Their purpose is to prevent soil from sticking to the discs 8 during use by scraping the soil off. The scrapers may, for example, be of the form disclosed in the abovementioned WO-A-92/06578.

To help to illustrate the features of the first illustrated embodiment of the invention an exemplary procedure involving the plough will now be described. The description of this procedure is not intended to be limiting.

By setting the frame 3 as shown in Figures 1 and 5 the plough is set for left-handed ploughing. Upon lowering the frame 3 the left-handed soil-displacing units 5B are brought into contact with the ground with the right-handed soil displacing units 5A pointing skywards, as shown in Figure 1. In the condition shown in Figures 1 and 5 the swing arms 9 trail downwardly from the pivot axes 15 to place the ploughing discs behind their respective left-handed soil displacing units 5B and also in contact with the ground. Upon driving the tractor forwardly the points 6 pull the plough into the ground. Continued forward motion causes the mouldboard-type soil-displacing units 5B to skim off from the surface of the ground, for example to a depth of approximately 10 centimetres, slivers of soil together with any stubble thereon. These slivers are lifted upwardly and rolled to the left and inverted, as depicted by arrows 21 in Figure 5. In the case of the second (lagging) of the two soil-displacing units 5B shown in Figure 5 the sliver skimmed off thereby will ideally be thrown sideways, into a furrow created by the first (leading) soil-displacing unit 5B and its associated ploughing disc 8.

Forward movement of the tractor also causes the ploughing discs 8 to rotate relative to their axes 14 in a first direction of rotation, this direction being the same direction as the rear wheels of the tractor. As mentioned above, the ploughing discs 8 advantageously extend deeper into the ground than their associated soil-displacing units 5B and are also wider in the transverse direction, as is most clearly visible in Figure 5. Accordingly, on rotating they will excavate soil underneath the sliver removed by their respective soil-displacing units 5, as well as soil to the (left) side thereof. The rotation of the discs 8 not only breaks this soil up but inverts it as it is displaced laterally (as shown by arrows 22 in Figure 5) in the direction of the adjacent furrow at least partly to cover up the sliver previously placed therein by their associated soil-displacing unit 5B. This has the advantageous effect not only of breaking the soil up but also burying much of the straw or stubble that was on the surface of the ground prior to it being ploughed up.

Once the end of the field is reached the tractor operator can lift up the frame 3 using the hitch on the back of the tractor and turn the tractor through 180° to the right to face back in the direction from whence it has come. The tractor operator then, in order to switch the plough from its left-handed ploughing mode to its right-handed ploughing mode, inverts the frame by turning it through a half turn about inversion axis IA in line with the tractor. This switches the left-handed soil displacing units 5B to pointing skywards and brings the right-handed soil displacing units 5A down to be positioned above the ground. In the first illustrated embodiment, where the swing arms 9 pivot under gravity alone, this action of inverting the frame will cause the swing arms to pivot around their respective pivot axes 15 automatically to bring each ploughing disc 8 from its previous operative position behind its associated left-handed soil-displacing unit 5B to its other operative position behind its associated right-handed soil-displacing unit 5A. The tractor operator can then lower the frame 3 and drive the tractor forwards to plough to the right parallel to the furrows ploughed on the previous pass of the tractor. The ploughing discs 8 and the right-handed soil displacing units 5A will operate in a similar way to that described above rotating in the same direction as the rear wheels of the tractor, except that they will displace soil to the right and the ploughing discs 8 will rotate relative to their axes in a second direction of rotation opposite to the abovementioned first direction of rotation associated with left-handed ploughing. The leading disc 8 and unit 5A will, if the tractor is positioned correctly, displace soil into the furrow created on the previous pass by the trailing disc 8 and left-handed soil displacing unit 5B. The reversibility of the plough thus allows for soil to be ploughed continuously in the same direction across the width of the field.

In the first illustrated embodiment the point 6 of each soil-displacing unit 5A,5B is shown as being integral with and leading the mouldboard-type body of the unit - see, for example, Figure 2. In an alternative arrangement (not shown) the point 6 may be provided rearwardly of the front face of its associated mouldboard-type body, ahead of the ground-contacting leading edge portion of its trailing associated ploughing disc 8. As an example, if in such a situation the mouldboard-type body extends into the ground by 5-8 cm the rearwardly positioned point is positioned to extend into the ground to a greater depth, for example approximately 10-13 cm, so as to be able to engage the soil sufficiently to generate a draft to hold the plough down during ploughing.

In a further modification, the point 6 may take the form of a bar which may be slid relative to its associated landside 7 and soil displacing unit 5 to adjust the depth of the leading end of the point and/or to compensate for wear of the point. Figure 6 is a detail view of such an arrangement. A releasable clamp is associated with an adjustable point holder 25 to enable the point bar to be slid to its new desired position and to be clamped in place. The clamp may, for example, be of a stud type.

As shown in Figures 4 and 5, auxiliary soil-displacing units 30A, 30B in the form of conventional skimmers may be mounted on the frame 3 ahead of the primary soil-displacing units 5A, 5B to assist with trash burial. These auxiliary units 30A, 30B may be in addition to, or even in place of, the primary units 5A, 5B. When provided in addition to the primary soil-displacing units 5A,5B the auxiliary soil displacing units 30A,30B may, for example, be arranged to extend into the ground to a depth of 7 cm, relative to a depth of 12 cm for the main units 5A,5B and a depth of 20 cm for the ploughing discs 8 so that soil is progressively displaced in slivers.

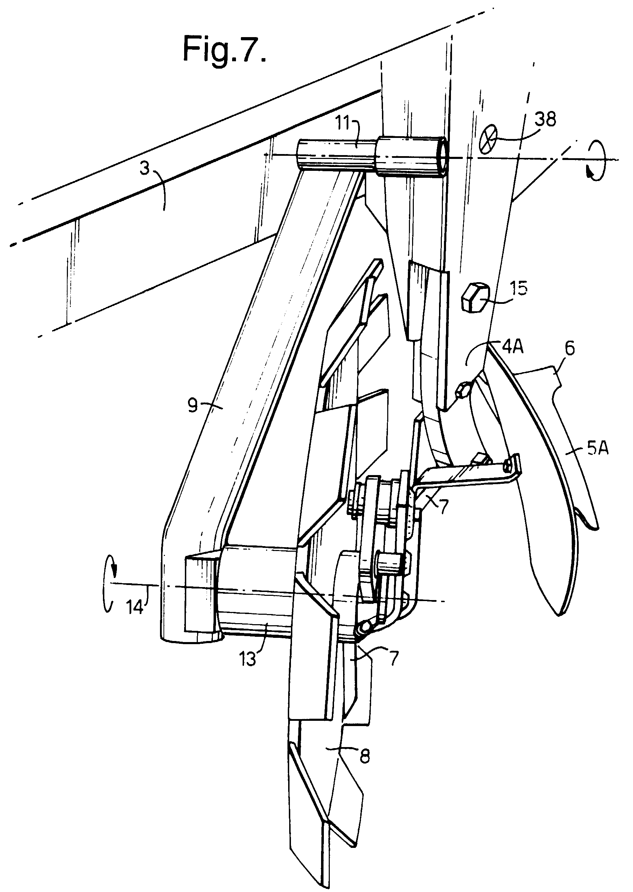

In the first illustrated embodiment each rotatable ploughing disc 8 is mounted on a swing arm 9 which is pivotally connected to the frame 3 at a location 10 separately of and rearwardly of the leg 4 carrying its associated forward soil displacing units 5A, 5B. This is shown most clearly in Figure 3. In a second preferred embodiment, illustrated in Figure 7, the swing arm 9 is instead pivotally attached to a common leg 4, not to the frame 3. In this second embodiment, the two legs 4A, 4B are common and are attached to the frame 3 by a pivot bolt 38 and by one or more shear bolts 15. If, in use, the soil displacing unit 5A contacts an immovable object such as a buried rock, the intention is that the shear bolt 15 should shear and that the leg 4A should pivot rearwardly (and the integral leg 4B should pivot forwardly) around pivot point 38 to avoid further damage to the plough. If the swing arm 9 were pivotally connected to the frame 3 (as in the first embodiment) there is a possibility that the leg 4A and its soil displacing unit 5A would collide with the ploughing disc 8 in such a situation. In the second illustrated embodiment, however, the pivotal attachment of the swing arm 9 to the common leg 4A,4B would prevent this from happening.

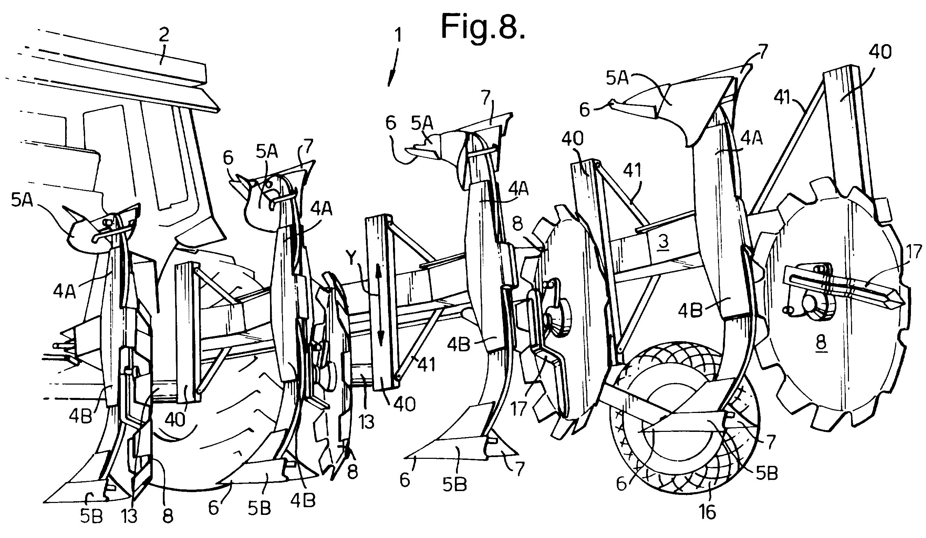

Although in the first and second illustrated embodiment of Figures 1-7 each rotatable ploughing disc 8 moves between its two operative positions by a pivoting action, movement between these two positions can be achieved in other ways. For example, as shown in a second embodiment illustrated in Figure 8 a disc 8 can be moved linearly (as shown by the double-headed arrow Y), rather than being swung through an arc as in the embodiment of Figures 1-7. The plough illustrated in Figure 8 is similar in most respects to that of Figure 1 so that the items of apparatus unchanged from the earlier embodiment retain their original reference numbers.

In the Figure 8 embodiment, so as to provide for linear movement the stub axle assembly 13 of each ploughing disc 8 is slidably mounted to a generally elongate slide 40 fixed to the frame 3. To strengthen the fixing each slide 40 may advantageously, as shown, be braced to the frame with a pair of braces 41. By controlling movement of each stub axle assembly 13 vertically along its associated slide 40 (in the direction of double-headed arrow Y) using, for example, a hydraulic ram one can readily translate a stub axle assembly from one end region of its associated slide 40 to the opposite end region so as to switch its ploughing disc 8 between its two operative positions.

By eliminating the need for a lengthy swing arm 19 the mounting of each ploughing disc to the frame 3 can be made very strong, especially when cross-braces 41 are provided to steady the ends of the slides 40.

In addition, by having adjustable end stops (not shown) on the slide the range of movement in direction Y can be easily regulated to vary the depth of the ploughing disc 8 without also needing to adjust the horizontal position of the ploughing disc from its associated leading soil-displacing unit 5.

A further advantage is that the stub axle assemblies 13 can readily be locked in position to resist any tendency of the ploughing discs 8 to "walk" out of the ground during ploughing. This locking effect might be achieved by utilising the resistance of a hydraulic ram to expansion/ contraction once its hydraulic fluid supply is cut.

By mounting the stub axle assemblies 13 to their slides 40 in such a way (not shown) that the directions of the discs' axes of rotation 14 relative to the ploughing direction PD is variable one can also build in a capability for varying the angle X (see Figure 4) between the rearwardly facing face of a ploughing disc 8 to the intended ploughing direction.

## Claims

1. A plough comprising:
a plurality of pairs of oppositely-handed soil-displacing units mounted on a frame and spaced apart across an intended ploughing direction, the frame being selectively invertible between left and right-handed ploughing positions to lower, in use, a selected unit from each pair of units for ploughing engagement with soil and to raise the other unit of each pair; and
a matching plurality of rotatable ploughing discs each associated with a different said pair of units and each mounted relative to the frame to move between its associated units to switch between two operative positions upon inversion of the frame between said left and right-handed ploughing positions, in each of its operative positions each said disc being positioned for ploughing engagement with soil behind the selected unit of its associated pair of units relative to the intended ploughing direction.

2. A plough as claimed in claim 1, wherein the frame is selectively invertible about an axis at least generally parallel to the intended ploughing direction, between positions approximately one half turn apart.

3. A plough as claimed in claim 1 or claim 2, wherein each rotatable ploughing disc is pivotable relative to the frame to move about a respective pivot axis between its two operative positions.

4. A plough as claimed in claim 3, wherein each said pivot axis is generally horizontal in use of the plough.

5. A plough as claimed in claim 3 or claim 4, wherein the pivot axis of each ploughing disc is angled relative to the intended ploughing direction.

6. A plough as claimed in claim 5, wherein each said pivot axis intersects the intended ploughing direction at an angle of approximately 25-70°, preferably about 40°.

7. A plough as claimed in any one of the preceding claims, wherein each rotatable ploughing disc has an axis of rotation relative to which it is rotatable in use in one direction for left-handed ploughing and in the opposite direction for right-handed ploughing.

8. A plough as claimed in claim 7 when dependent on any one of claims 3 to 6, wherein the axis of rotation of each ploughing disc is at least substantially parallel to that ploughing disc's pivot axis.

9. A plough as claimed in any one of claims 3 to 8, wherein each rotatable ploughing disc is pivotable relative to said frame on a swing arm which arm extends between a pivotal connection at the ploughing disc's pivot axis and the axis of rotation of the ploughing disc to support the ploughing disc.

10. A plough as claimed in claim 9, wherein the frame includes a beam extending generally diagonally with respect to the intended ploughing direction and, in use, each swing arm extends downwardly and rearwardly from its respective pivot axis to rotatably support its respective ploughing disc below the level of the beam.

11. A plough as claimed in any one of claims 3 to 10, wherein the pivot axes of the ploughing discs are all substantially parallel to one another.

12. A plough as claimed in any one of claims 3 to 11, wherein the pivot axis for each ploughing disc is spaced from each of that disc's two associated soil-displacing units by approximately the same amount.

13. A plough as claimed in any one of claims 3 to 12, wherein the ploughing discs are pivotally connected directly to the frame.

14. A plough as claimed in any one of claims 3 to 12, wherein each ploughing disc is pivotally connected to a leg on which its associated soil displacing units are mounted to the frame.

15. A plough as claimed in claim 1 or claim 2, wherein each rotatable ploughing disc is mounted to the frame to move generally linearly between its two operative positions.

16. A plough as claimed in any one of claims 1, 2 and 15, wherein each rotatable ploughing disc is slidable along a slide between its two operative positions.

17. A plough as claimed in any one of the preceding claims, wherein in a first one of its operative positions each ploughing disc is in a geometric position relative to the selected one of its two associated soil-displacing unit that is generally similar to the geometric position it is in its other of its operative positions relative to the other of its two associated soil-displacing units when that other unit is the selected unit.

18. A plough as claimed in any one of the preceding claims, wherein in their operative positions the rotatable ploughing discs are, in use, arranged to move soil laterally relative to the ploughing direction at least partially to cover soil previously displaced by the selected one of their associated soil-displacing units.

19. A plough as claimed in any one of the preceding claims, wherein each soil-displacing unit is shaped to displace soil by skimming off from the surface of the ground a sliver of soil together with any stubble thereon.

20. A plough as claimed in claim 19, wherein each soil-displacing unit is shaped to invert the sliver as it displaces it laterally.

21. A plough as claimed in any one of the preceding claims, wherein each soil-displacing unit comprises a mouldboard-type plough body or skimmer body.

22. A plough as claimed in claim 21, wherein, in use, the mouldboard-type or skimmer bodies are more greatly inclined relative to the intended ploughing direction by approximately the same amount as their respective ploughing discs.

23. A plough as claimed in any one of the preceding claims, wherein left-handed ones of the soil-displacing units are mounted on legs which depend downwardly from the frame in said left-handed ploughing position and which extend upwardly in said right-handed ploughing position and right-handed ones of the soil-displacing units are mounted on legs which depend downwardly from the frame in said right-handed ploughing position and which extend upwardly in said left-handed ploughing position.

24. A plough as claimed in claim 23, wherein each leg has a left-handed soil-displacing unit mounted on one end of it and its paired right-handed soil-displacing unit mounted on its other end.

25. A plough as claimed in any one of the preceding claims, wherein each soil-displacing unit includes a point for, in use, engaging and cutting the ground ahead of its respective ploughing disc.

26. A plough as claimed in claim 25, wherein a point takes the form of a bar which is adjustable in its position relative to the rest of the soil displacing unit to adjust the depth of the point and/or to accommodate for wear of the point.

27. A plough as claimed in claim 25 or claim 26, wherein at least one soil-displacing unit includes a rearwardly extending landside aligned with its point in the intended ploughing direction.

28. A plough as claimed in claim 27, wherein the landside extend rearwardly, in use to terminate in front of the respective ploughing disc.

29. A plough as claimed in any one claims 25 to 28, wherein each ploughing disc has a ground-contacting leading edge portion which, in use, is at ground level and rolls into contact with the ground as the disc rotates.

30. A plough as claimed in claim 29, wherein the ground-contacting leading edge portion of each ploughing disc is arranged, in use, to be positioned behind and generally aligned in the ploughing direction with the point of the selected one of its associated pair of soil-displacing units.

31. A plough as claimed in claim 29, wherein the ground-contacting leading edge portion of each ploughing disc is arranged, in use, not to be generally aligned in the ploughing direction with the leading point of the selected one of its associated pair of soil-displacing units but instead to be laterally offset therefrom to be behind and laterally to overlap with another portion of the selected one of its associated soil-displacing units.

32. A plough as claimed in claim 31, wherein the lateral offset is at least 5 centimetres.

33. A plough as claimed in any one of the preceding claims, wherein the frame has a forward portion for attachment to a tractor and extends rearwardly therefrom to a rearward portion, the rearward portion of the frame being provided with a pair of landsides each to, in use, engage the soil to resist transverse movement of the plough in a different one of said left and right-handed ploughing positions.

34. A plough as claimed in any one of the preceding claims, wherein the ploughing discs and the pairs of soil-displacing units are spaced apart along the frame diagonally with respect to the intended ploughing direction.

35. A plough as claimed in any one of the preceding claims, wherein rearwardly facing faces of central portions of the ploughing discs in use make an angle with the intended ploughing direction of approximately 20-60°, preferably about 35°.

36. A plough as claimed in any one of the preceding claims, wherein the distances through which the ploughing discs move relative to the frame upon inverting the frame between the left and right-handed ploughing positions are controllable to allow variation of the position of the ploughing discs relative to their respective soil-displacing units.

37. A plough as claimed in any one of the preceding claims, wherein in use each ploughing discs extend into the ground by a greater amount than does the selected one of its associated pair of soil-displacing units.

38. A plough as claimed in claim 37, wherein in use the ploughing discs extend into the ground approximately 15-25 centimetres and the selected soil-displacing units extend into the ground approximately 5-15 centimetres.
